# EUROPÄISCHE PATENTANMELDUNG

(11) **EP 1 393 939 A2**
(43) Veröffentlichungstag der Anmeldung: **03.03.2004**
(21) Anmeldenummer: 03019334.6
(22) Anmeldetag: 27.08.2003
(51) Int. Cl.: B60J 1/20

(54) **Rollobahn als Sonnenschutz**

(30) Priorität: 29.08.2002 DE 10240581; 29.08.2002 DE 10240582
(71) Anmelder: Webasto Vehicle Systems International GmbH, 82131 Stockdorf (DE)
(72) Erfinder: Engl, Andreas, 80469 München (DE)
(74) Vertreter: Bedenbecker, Markus

(57) **Zusammenfassung**

Die Erfindung betrifft einen zwischen einer Betriebslage unter einem lichtdurchlässigen Dachbereich und einer Ruhelage neben diesem Dachbereich bewegbaren Sonnenschutz, insbesondere für ein zumindest teilweise transparentes Fahrzeugdach (4), mit einer unterhalb des Daches (4) angeordneten und auf eine Wickelrolle (12) aufwickelbaren Rollobahn (10) und mit einem an einem Querspriegel (18, 118) anliegenden bzw. befestigten freien Ende (22) der Rollobahn (10). Der Querspriegel (18, 118) ist in geschlossener Betriebslage an einem Endanschlag im Dachbereich fixierbar bzw. anlegbar.

Es ist vorgesehen, dass die Rollobahn (10) im Querspriegel (18, 118) in Querrichtung unter Vorspannung fixiert ist oder beweglich fixiert ist.

## Beschreibung

Die Erfindung betrifft einen zwischen einer Betriebslage unter einem lichtdurchlässigen Dachbereich und einer Ruhelage neben diesem Dachbereich bewegbaren Sonnenschutz, insbesondere für ein zumindest teilweise transparentes Fahrzeugdach mit einer unterhalb des Daches angeordneten und auf einer Wickelrolle aufgewickelten Rollobahn gemäß dem Oberbegriff der Ansprüche 1 bzw. 7.

Derartige Rollos sind als Blendschutz bzw. zur Abdeckung von Glasflächen im Kraftfahrzeug in verschiedenartiger Ausgestaltung bekannt. So beschreibt bspw. die DE 42 10 972 A1 ein Rollo als Blendschutz mit einer drehbar gelagerten Wickelwalze für einen aufrollbaren Behang, an dessen abzugseitigen Ende ein Fallstab angeordnet ist und mit einer Antriebsvorrichtung für die Wickelwalze. Der Behang ist beim Ausfahren von mindestens einem Teleskopstab geführt, der am Fallstab des Behangs angreift. Ein solches Rollo eignet sich insbesondere für eine Heckscheibe des Kraftfahrzeugs, weniger jedoch für ein Glasdach, unter dem es annähernd waagrecht ausgezogen werden muss. Bei einem waagrechten Auszug ist eine zusätzliche Abstützung bzw. Führung zur Verhinderung einer zu starken Durchbiegung notwendig.

Die DE 198 60 826 A1 beschreibt einen Sonnenschutz für einen lichtdurchlässigen Dachbereich, insbesondere ein Kraftfahrzeugglasdach. Der Sonnenschutz umfasst ein Rollo mit einer Wickelrolle, das an seiner freien Kante eine selbsthemmend in seitlichen Schiebeführungen laufende Spannleiste trägt, an der drehmomentübertragend mit der Wickelrolle verbundene über eine Umlenkrolle geführte Zugbänder angreifen. Das Rollo und die Zugbänder sind durch eine Federanordnung unter Spannung gehalten. Um das Rollo jederzeit unter Spannung zu halten und eine Faltenbildung zu vermeiden, ist bei dieser bekannten Anordnung ein relativ großer konstruktiver Aufwand notwendig.

Ein führungsschienenfreies Sonnenschutzrollo für ein Kraftfahrzeug ist aus der DE 100 40 624 A1 bekannt. Die Rollobahn ist zur Verhinderung eines Durchhanges entweder selbst hinreichend biegesteif oder an ihrer Vorderkante mit Hilfe von geführten Führungs- und Schubstangen getragen. Ihre Vorder- oder Unterkante wird an der betreffenden Scheibe zur Anlage gehalten. Schließlich ist aus der DE 101 22 570 C1 ein Sonnenschutzrollo für ein Fahrzeugdach bekannt, das eine unterhalb des Daches angeordnete und auf eine Wickelspule aufwickelbare Rollobahn aufweist, deren gegenüberliegende Seitenränder in Rollobewegungsrichtung an Führungsschienen verschiebbar geführt sind und in Querrichtung unter Vorspannung der Rollobahn gehalten sind.

Generell treten beim Einbau der bekannten Rolloanordnungen oftmals geringe Einbautoleranzen auf, die zu einer unerwünschten Faltenbildung des ausgezogenen Sonnenschutzrollos führen können. Dies kann insbesondere dann der Fall sein, wenn eine Wickelrolle und ein Querspriegel des ausgezogenen Sonnenschutzrollos nicht miteinander fluchten.

Die der Erfindung zugrunde liegende Aufgabe besteht darin, eine Rolloanordnung für ein Fahrzeugdach, die ggf. eine Schienenführung aufweisen kann, dahingehend zu verbessern, dass eine Faltenbildung des ausgezogenen Rollos weitgehend verhindert werden kann. Weiter soll die Rolloanordnung einfach aufgebaut und einfach zu bedienen.

Diese Aufgaben werden mit einem beweglichen Sonnenschutz gemäß dem Oberbegriff des Patentanspruchs 1 dadurch gelöst, dass die Rollobahn in einem Querspriegel in Querrichtung unter Vorspannung fixiert ist. Bei der Herstellung der Verbindung zwischen umgeschlagener Rollobahn und Querspriegel wird die Rollobahn zunächst mit dem Querspriegel verbunden, anschließend in Querrichtung unter Vorspannung gebracht und vorzugsweise an den beiden gegenüberliegenden Enden des länglichen Querspriegels jeweils fixiert. Dies kann vorzugsweise mittels wenigstens zwei Fixierelementen zur faltenfreien Fixierung des freien Endes der Rollobahn im Querspriegel erfolgen. Die Fixierelemente können in einer ersten Variante der Erfindung als Querstifte ausgebildet sein, die durch entsprechende Ausnehmungen im Querspriegel und in der Rollobahn führen und dort fest fixiert sind. Eine alternative Ausgestaltung kann vorsehen, dass die Rollobahn im Querspriegel verklemmt bzw. verstemmt ist und auf diese Weise fest mit dem Querspriegel verbunden ist.

Wahlweise kann zusätzlich vorgesehen sein, dass gegenüberliegende Seitenränder der Rollobahn in einer Bewegungsrichtung der Rollobahn an Führungsschienen seitlich geführt sind und in Querrichtung unter Vorspannung der Rollobahn gehalten sind. Derartige Führungsschienen sind dazu geeignet, die Rollobahn auch über einen größeren Auszugsweg falten- und durchhangfrei zu führen.

Die zuvor genannten Aufgaben werden alternativ dadurch gelöst, dass die Rollobahn in einem Querspriegel in Querrichtung beweglich fixiert ist. Vorzugsweise ist ein freies Ende der Rollobahn in Längserstreckungsrichtung des Querspriegels verschiebbar. Durch eine solche schwimmende Lagerung der Rollobahn können Lagedifferenzen beim Einbau ausgeglichen und daraus resultierende Faltenbildungen der ausgezogenen Rollobahn verhindert werden.

Vorzugsweise ist das freie Ende der Rollobahn in einer Nut des Querspriegels gehalten. Zweckmäßigerweise ist das freie Ende der Rollobahn mit einem zusätzlichen versteifenden Halterelement seitlich in die Nut eingeschoben. Das versteifende Halteelement kann mit der Rollobahn bzw. mit dessen freiem Ende verklebt und/oder vernietet sein und bildet auf diese Weise ein stabiles Gegenstück gleicher Breite wie der Querspriegel, das gegenüber diesem um einen kleinen Weg verschoben werden kann. Mittels der schwimmenden Lagerung des versteifenden Halteelements im Querspriegel können Einbautoleranzen ausgeglichen und eine Faltenbildung der ausgezogenen Rollobahn verhindert werden.

Eine weitere Ausführungsform der Erfindung sieht vor, dass gegenüberliegende Seitenränder der Rollobahn in einer Bewegungsrichtung der Rollobahn an Führungsschienen seitlich geführt sind und in Querrichtung unter Vorspannung der Rollobahn gehalten sind. Derartige Führungsschienen sind dazu geeignet, die Rollobahn auch über einen größeren Auszugsweg falten- und durchhangfrei zu führen. Gemäß einer bevorzugten Ausgestaltung ist das Halteelement mittels Federelementen ungefähr mittig zwischen den Führungsschienen zentriert. Diese Federelemente können bspw. als schräg zur Führungsschiene weisende Blattfedern ausgestaltet sein, die am Halteteil befestigt sind und die für eine weitgehende Zentrierung des Halteteils sorgen, so dass gleichzeitig eine Faltenbildung verhindert wird.

Weitere vorteilhafte Ausgestaltungen und Merkmale der Erfindung werden nachfolgend unter Bezugnahme auf die beiliegenden Zeichnungen näher erläutert. Es zeigt:
- Figur 1: in Draufsicht in schematischer Darstellung ein Fahrzeugdach mit einem festen Glasdeckel und einem darunter angeordneten Sonnenrollo,
- Figur 2: eine perspektivische Darstellung eines Einspannbereichs einer Rollobahn in einem Querspriegel,
- Figur 3: eine erste Ausgestaltung einer Fixierung der Rollobahn im Querspriegel in schematischer Schnittdarstellung,
- Figur 4: eine alternative Fixierung der Rollobahn im Querspriegel in schematischer Schnittdarstellung,
- Figur 5: eine perspektivische Darstellung eines Einspannbereichs einer Rollobahn in einem Querspriegel in eine weitere Ausführungsform der Erfindung,
- Figur 6: eine schematische Draufsicht einer Ausgestaltung einer Führung eines Halteelements der Rollobahn im Querspriegel sowie in seitlichen Führungsleisten und
- Figur 7: eine perspektivische Schemasicht der Führung des Halteelements gemäß Figur 6.

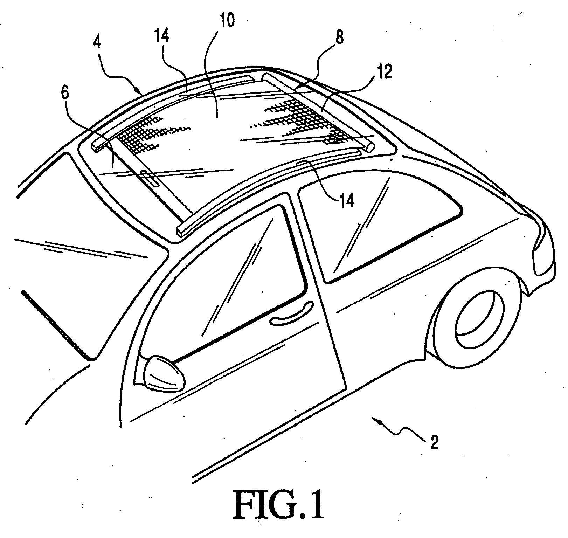

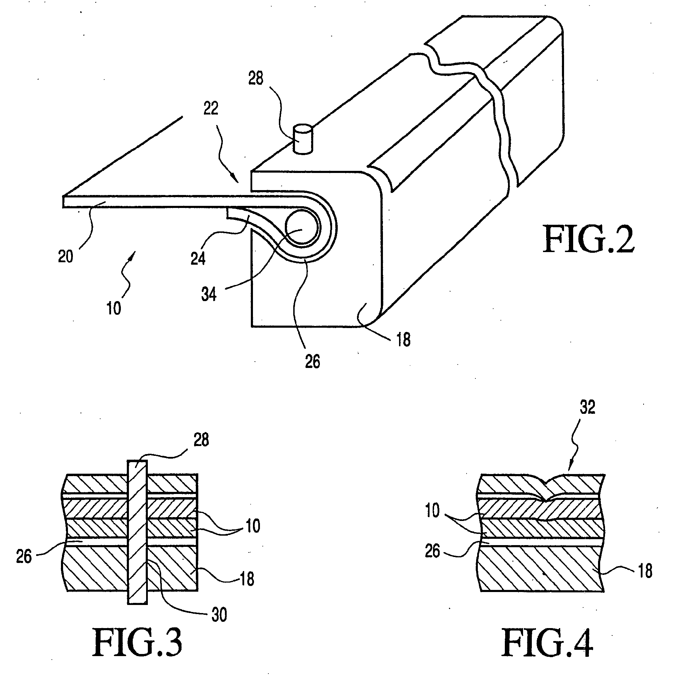

Figur 1 zeigt ein Kraftfahrzeug 2, das ein Fahrzeugdach 4 mit einem transparenten Dachabschnitt aufweist, der im dargestellten Ausführungsbeispiel ein fester Glasdeckel 6 ist. Der transparente Dachabschnitt kann auch ein bewegbarer Deckel zum Verschließen oder zumindest teilweisen Freigeben einer Dachöffnung eines zu öffnenden Fahrzeugdaches 4, bspw. eines Schiebedaches, Schiebehebedaches, Spoilerdaches oder dgl. sein. Unterhalb des Fahrzeugdaches 4 bzw. des Glasdeckels 6 ist ein Sonnenschutzrollo 8 angeordnet, das eine Rollobahn 10 und eine Wickelwelle 12 zum Auf- und Abwickeln der Rollobahn 10 aufweist. Die Wickelwelle 12 enthält einen hohlzylindrischen Wickelkörper 16, der beidseitig jeweils auf einem Lagerteil angeordnet ist, das über einen axial vorstehenden Lagerzapfen am 4 drehbar gelagert ist. An einem freien Ende der Rollobahn 10 ist diese mit einem Querspriegel 18 verbunden (vgl. Figur 2), der in geschlossener Stellung des Sonnenrollos 8 in einer Endlage unterhalb des Daches fixierbar und/oder einhängbar ist. Zusätzlich können Seitenränder 20 der Rollobahn 10 in seitlichen Führungsschienen 14 geführt sein, die für eine Querspannung des ausgezogenen Sonnenrollos 8 sorgen.

Figur 2 zeigt in perspektivischer Darstellung eine Verbindung der Rollobahn 10 mit dem Querspriegel 18. Ein freies Ende 22 der Rollobahn 10 ist umgeschlagen und mit dem ungeschlagenen Abschnitt 24, in den vorzugsweise ein Draht 34 o. dgl. eingelegt sein kann, in eine Längsnut 26 des Querspriegels 18 eingeschoben und kann sich zunächst seitlich frei bewegen, jedoch nicht in Bewegungsrichtung der Rollobahn 10 aus dem Querspriegel 18 herausgezogen werden.
Zur Fixierung der Rollobahn 10 im Querspriegel 18 wird diese zunächst seitlich straff gespannt und anschließend an beiden gegenüberliegenden Enden des Querspriegels 18 in diesem fest fixiert. Dies kann bspw. durch Stifte 28 (vgl. Figur 3) oder durch eine Verklemmung 32 (vgl. Figur 4) bzw. eine Verstemmung erfolgen.

Die Stifte 28 können in entsprechend dafür vorgesehene Aufnahmen 30 des Querspriegels 18 sowie der Rollobahn 10 und/oder dessen Drahtseele 34 geschoben werden. Die Stifte 28 können wahlweise überstehen, wie dies in Figur 3 dargestellt ist. Vorzugsweise enden die Stifte 28 jedoch bündig im Querspriegel 18 und ragen nicht aus diesem heraus. Die Stifte 28 können mit dem Querspriegel 18 in Presspassung verbunden oder dort verschraubt sein. In der in Figur 3 gezeigten Darstellung sind die Stifte 28 lediglich durch die Rollobahn 10 geschoben, nicht jedoch durch den Draht 34, um den das freie Ende 22 geschlungen ist.

Eine Verklemmung 32, wie dies in Figur 4 dargestellt ist, kann vorteilhafter Weise unter Aufbringung einer hohen Punktlast erfolgen, die eine plastische Verformung des metallischen Querspriegels 18 bewirkt. Als Material für den Querspriegel eignet sich insbesondere Aluminium, dass ein geringeres Gewicht aufweist und relativ leicht in der gewünschten Weise plastisch verformt werden kann. Auf diese Weise wird die Rollobahn 10 fest im Querspriegel 18 fixiert und steht jederzeit unter Spannung.

In einer alternativen Ausgestaltung der Erfindung kann die Rollobahn seitlich zusätzlich in Führungsschienen 14 (vgl. Figur 1) geführt sein, was für eine permanente Spannung der Rollobahn 10 sorgen kann und eine Faltenbildung verhindern kann. Im vorderen Bereich in Nähe des Querspriegels 18 wird die Faltenbildung zuverlässig durch die erfindungsgemäße Fixierung der Rollobahn im Querspriegel 18 verhindert.

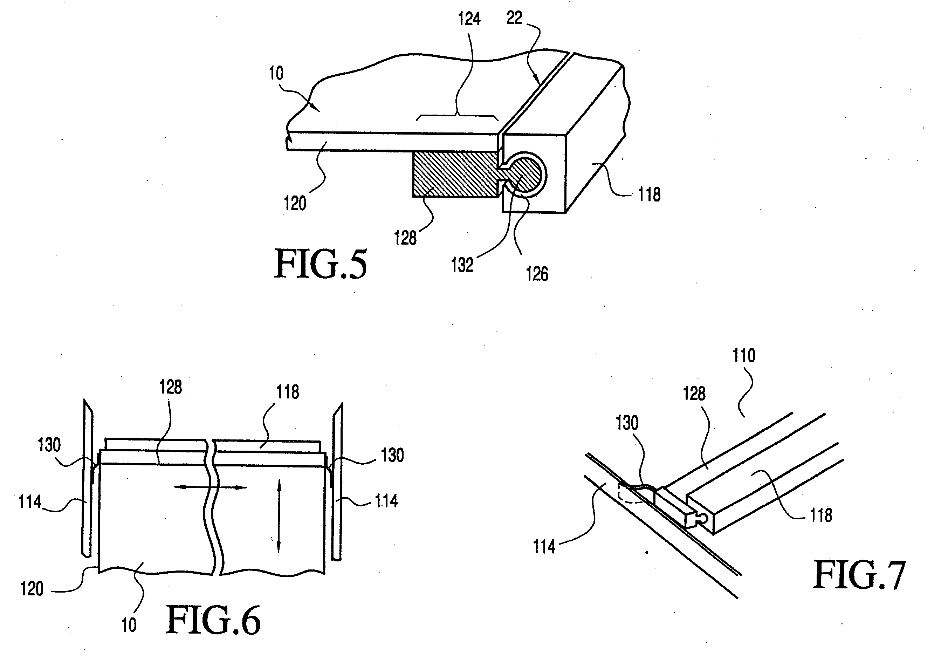

Figur 5 zeigt eine alternative Verbindung der Rollobahn 10 mit dem Querspriegel 18. Hierzu ist ein freies Ende 22 der Rollobahn 10 mit einem Halteelement 128 verbunden, das in Querspriegel 118 in dessen Längserstreckungsrichtung verschiebbar gehalten und geführt ist. Zu diesem Zweck weist der Querspriegel 118 eine zur Rollobahn 10 weisende Nut 126 auf, in die ein vorderer Führungsabschnitt 132 des Halteelements 128 eingeschoben werden kann. Die Nut 126 weist eine relativ schmale Öffnung und eine sich im Querschnitt verbreiternde Kontur, bspw. in Form eines Kreissegments auf. Der Führungsabschnitt 132 der Halteelements 128 weist eine korrespondierende Kontur mit einem schlanken Verbindungsbereich und einem sich verbreitenden Führungsbereich auf.

Das Halteelement 128 weist die Kontur eines flachen Stabes auf und ist vorzugsweise relativ steif ausgeführt, so dass es selbst keiner Durchbiegung oder Knickung unterliegen kann. Die Verbindung zwischen Rollobahn 10 und Halteelement 128 entlang eines Verbindungsabschnitts 124 kann in vorteilhafter Weise mittels einer Verschweißung, einer Verklebung und/oder mittels zusätzlichen Nieten erfolgen. Als Halteelement 128 kommt bspw. ein Kunststoffteil oder ein geeignetes Metallteil, bspw. Leichtmetall wie Aluminium, in Frage. Auch kann ein beschichtetes Holz- oder Verbundbauteil eingesetzt werden.

In einer alternativen Ausgestaltung der Erfindung kann die Rollobahn 10 seitlich zusätzlich in Führungsschienen 114 (vgl. Figur 1, 6 und 7) geführt sein, was für eine permanente Spannung der Rollobahn 10 sorgen und eine Faltenbildung verhindern kann. Im vorderen Bereich in Nähe des Querspriegels 118 wird die Faltenbildung zuverlässig durch eine entsprechende Verbindung der Rollobahn 10 mit dem Halteelement 128 verhindert.

Figur 6 verdeutlicht in einer schematischen Draufsicht eine Ausgestaltung der erfindungsgemäßen Anordnung, bei der am Halteelement 128 seitlich zusätzliche Federelemente 130 angebracht sind, die für eine Zentrierung der schwimmend im Querspriegel 118 gelagerten Rollobahn 10 zwischen den Führungsschienen 114 sorgt. Die Federelemente 130 sind als kurze Blattfedern mit freiem Ende ausgestaltet, deren festes Ende mit dem Halteelement 128 verbunden und deren freies Ende, das vorzugsweise einen Radius aufweist, entlang der Führungsschienen 114 gleiten kann.

Figur 7 zeigt die Ausgestaltung der Federelemente 130 in perspektivischer Darstellung. Die Federelemente 130 können in vorteilhafter Ausgestaltung mit dem Halteelement 128 derart verbunden sein, dass sie bspw. in einer gemeinsamen Spritzgussform hergestellt sind. Die Federelemente 130 bestehen in diesem Fall aus Kunststoff. Es kommen auch angeschraubte oder angenietete Metallfedern als Federelemente 130 in Frage. Die Federn dürfen nicht zu steif ausgelegt sein, so dass einerseits eine Zentrierung des Halteelements 128 zwischen den Führungsschienen 114 gewährleistet wird, andererseits jedoch ein geringer Toleranzausgleich weiterhin ermöglicht ist um eine Faltenbildung der Rollobahn 10 im ausgezogenen Zustand zu verhindern.

Das Material für die Rollobahn unterliegt zweckmäßigerweise keiner plastischen Verformung, leidet also nicht unter einem Verlust der Vorspannung. Für den gewünschten Einsatzzweck eignet sich bspw. ein Kunststoffgewebe mit einer Stoffoptik, das ggf. einen mehrschichtigen Aufbau aufweisen kann. Auch eine in entsprechender Weise verarbeitete Polyurethanpaste oder ein Gestricke eignet sich für den gewünschten Zweck. Als geeignetes Material für die Rollobahn 10 kommt bspw. auch ein textiles Flechtmaterial in Frage, wie es in der Offenlegungsschrift DE 100 61 827 A1 beschrieben ist.

### Bezugszeichenliste

- 2: Kraftfahrzeug
- 4: Fahrzeugdach
- 6: Glasdeckel
- 8: Sonnenrollo
- 10: Rollobahn
- 12: Wickelwelle
- 14, 114: Führungsschiene
- 18, 118: Querspriegel
- 20, 120: Seitenrand
- 22: freies Ende
- 24: umgeschlagener Abschnitt
- 26,126: Nut (Querspriegel)
- 28: Stift
- 30: Aufnahme
- 32: Verklemmung
- 34: Draht
- 124: Verbindungsabschnitt
- 128: Halteelement
- 130: Federelement
- 132: Führungsabschnitt

## Patentansprüche

1. Zwischen einer Betriebslage unter einem lichtdurchlässigen Dachbereich und einer Ruhelage neben diesem Dachbereich bewegbarer Sonnenschutz, insbesondere für ein zumindest teilweise transparentes Fahrzeugdach (4), mit einer unterhalb des Fahrzeugdaches (4) angeordneten und auf eine Wickelrolle (12) aufwickelbaren Rollobahn (10) und mit einem an einem Querspriegel (18) anliegenden oder befestigten freien Ende (22) der Rollobahn (10), der in geschlossener Betriebslage an einem Endanschlag im Dachbereich anlegbar ist oder fixierbar, **dadurch gekennzeichnet, dass** die Rollobahn (10) im Querspriegel (18) in Querrichtung unter einer Vorspannung fixiert ist

2. Sonnenschutz nach Anspruch 1, **gekennzeichnet durch** wenigstens zwei Halteelemente zur faltenfreien Fixierung des freien Endes der Rollobahn (10) im Querspriegel (18).

3. Sonnenschutz nach Anspruch 2, **gekennzeichnet durch** eine Fixierung des freien Endes (22) der Rollobahn (10) im Querspriegel (18) mittels Stiften (28).

4. Sonnenschutz nach Anspruch 2, **gekennzeichnet durch** Verklemmungen (32) des freien Endes (22) der Rollobahn (10) im Querspriegel (18).

5. Sonnenschutz nach einem der vorhergehenden Ansprüche, **gekennzeichnet durch** eine Längsnut (26) im Querspriegel (18) zur Aufnahme eines umgeschlagenen Abschnittes (24) des freien Endes (22) der Rollobahn (10).

6. Sonnenschutz nach einem der vorhergehenden Ansprüche, **dadurch gekennzeichnet**, das im Querspriegel (18) und in einem Kern (34), um den das freie Ende (22) der Rollobahn (10) geschlagen ist, Stifte (28) eingesetzt sind.

7. Zwischen einer Betriebslage unter einem lichtdurchlässigen Dachbereich und einer Ruhelage neben diesem Dachbereich bewegbarer Sonnenschutz, insbesondere für ein zumindest teilweise transparentes Fahrzeugdach (4), mit einer unterhalb des Fahrzeugdaches (4) angeordneten und auf eine Wickelrolle (12) aufwickelbaren Rollobahn (10) und mit einem an einem Querspriegel (18) anliegenden oder befestigten freien Ende (22) der Rollobahn (10), der in geschlossener Betriebslage an einem Endanschlag im Dachbereich anlegbar ist oder fixierbar, **dadurch gekennzeichnet, dass** die Rollobahn (10) in Querspriegel (118) in Querrichtung beweglich fixiert ist.

8. Sonnenschutz nach Anspruch 7, **gekennzeichnet durch** eine Verschiebbarkeit des freien Endes (22) der Rollobahn (10) in Längserstreckungsrichtung des Querspriegels (118).

9. Sonnenschutz nach Anrpuch 7 oder 8, **dadurch gekennzeichnet, dass** das freie Ende (22) der Rollobahn (10) in einer Nut (126) des Querspriegels (118) gehalten ist.

10. Sonnenschutz nach Anspruch 9, **dadurch gekennzeichnet, dass** das freie Ende (22) der Rollobahn (22) mit einem versteifenden Halteelement (128) versehen und seitlich in die Nut (126) eingeschoben ist.

11. Sonnenschutz nach Anspruch 10, **dadurch gekennzeichnet, dass** das Halteelement (128) mittels Federelementen (130) ungefähr mittig zwischen den Führungsschienen (14) zentriert ist.

12. Sonnenschutz nach Anspruch 11, **dadurch gekennzeichnet, dass** die Federelemente (130) als an den Enden des länglichen Halteelements (128) fixierte Blattfedern ausgebildet sind.

13. Sonnenschutz nach einem der vorhergehenden Ansprüche, **dadurch gekennzeichnet, dass** gegenüberliegende Seitenränder (20, 120) der Rollobahn (10) in einer Bewegungsrichtung der Rollobahn (10) an Führungsschienen (14) seitlich geführt sind und in Querrichtung unter Vorspannung der Rollobahn (10) gehalten sind.
